**Europäisches Patentamt**

(19) **European Patent Office**

**Office européen des brevets**

(11) Publication number : **0 326 292 B1**

(12) **EUROPEAN PATENT SPECIFICATION**

(45) Date of publication of patent specification :
30.09.92 Bulletin 92/40

(51) Int. Cl.⁵ : **F16L 15/04**

(21) Application number : **89300547.0**

(22) Date of filing : **20.01.89**

(54) **Hydraulic coupling.**

(30) Priority : **27.01.88 US 148846**

(43) Date of publication of application :
**02.08.89 Bulletin 89/31**

(45) Publication of the grant of the patent :
**30.09.92 Bulletin 92/40**

(84) Designated Contracting States :
**AT BE CH DE ES FR GB IT LI NL SE**

(56) References cited :
**CH-A- 57 603**
**DE-A- 2 458 359**
**DE-B- 1 289 374**

(56) References cited :
**GB-A- 900 274**
**US-A- 1 132 619**
**US-A- 2 907 589**
**US-A- 4 253 687**

(73) Proprietor : **NWD INTERNATIONAL, INC.**
**22 Merrill Lynch Plaza 130 West Main Street**
**Fort Wayne Indiana 46802 (US)**

(72) Inventor : **Williamson, Nigel D.L.**
**12803 Hurshtown Road**
**Grabill, Indiana 46741 (US)**

(74) Representative : **Jackson, Peter Arthur et al**
**Gill Jennings & Every, 53-64 Chancery Lane**
**London WC2A 1HN (GB)**

## Description

The present invention relates to fluid couplings, and in particular to couplings which are used in high pressure hydraulic environments, as encountered on machine tools, agricultural and construction equipment and the like.

For many years, the hydraulics industry has relied on hydraulic couplings for use in manifolds, pump housings and control units, that comply with the SAE J514 standard. These couplings utilize an O-ring, and are known in the industry as O-ring boss fittings. Although the O-ring boss fitting is significantly better than the metal-to-metal couplings used elsewhere in hydraulic systems, and functions well in lower pressure environments, current hydraulic applications utilize significantly higher pressures, and the application of hydraulics to the robotics and other environmentally sensitive applications dictates that all hydraulic couplings be leak free.

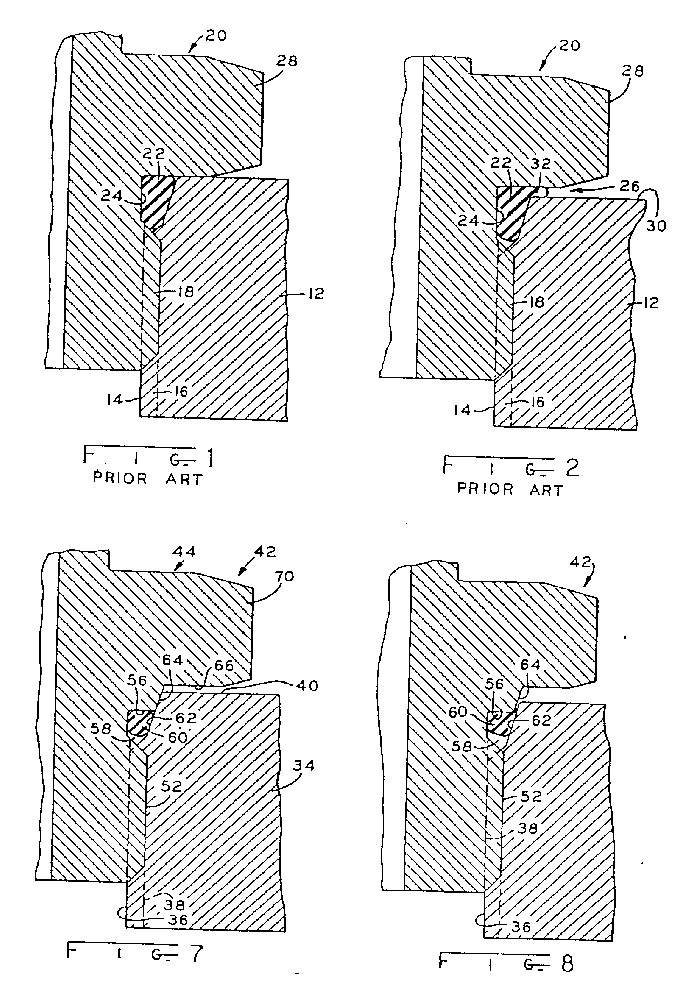

A major reason for the failure of certain prior art O-ring fittings is the rotational loosening of threads which occurs under conditions of high pressure and vibration. During this movement, a gap between the back face of an hydraulic fitting and the front face of an hydraulic port is opened up, which eventually leads to the O-ring material being extruded under pressure into the interface. Fig. 1 illustrates a prior art O-ring boss fitting wherein the manifold 12 has a port 14 therein which is provided with internal threads 16 that are threadedly connected to the external threads 18 of fitting 20. As will be seen, O-ring 22 is received within an undercut groove 24 in fitting 20 and fills substantially all of the space therein. As the fitting 20 is screwed into port 14, O-ring 22 is compressed and becomes, in all respects, another solid component, incapable of responding to pressure differentials within the interface area. Even in the case where the O-ring may not fill the entire space but fills a very high percentage of the space, the O-ring will be incapable of experiencing any significant axial movement and will function similarly to the case where the O-ring substantially fills the entire space.

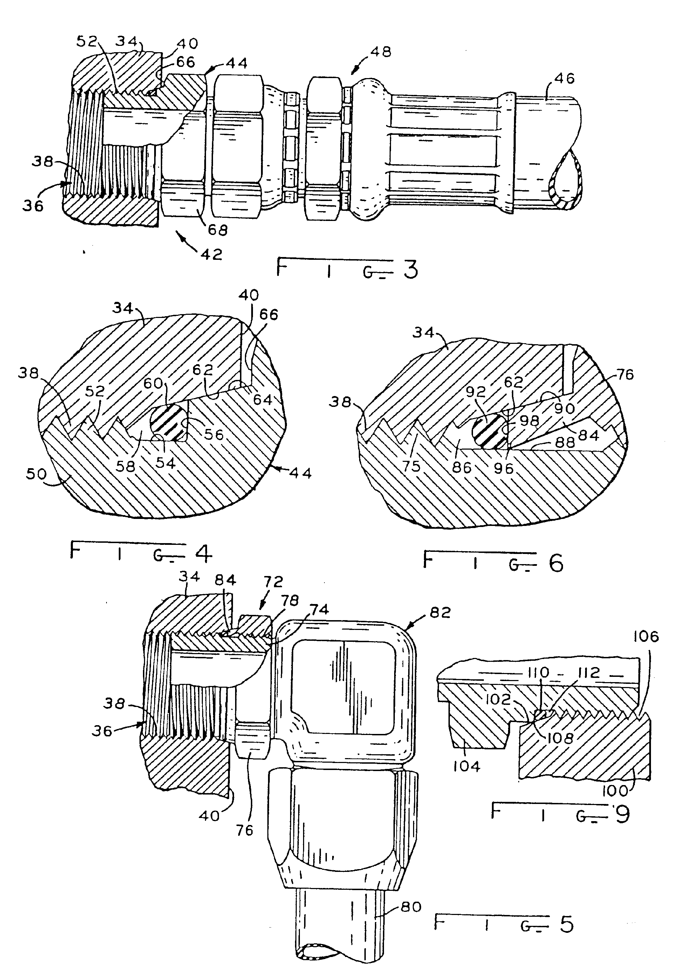

Fig. 2 illustrates what happens when fitting 20 is subjected to conditions of pressure and vibration. As will be seen, the rotation of threads 16 and 18 creates a gap 26 between hexagonal collar 28 of fitting 20 and the face 30 of manifold 12. As hydraulic pressure is exerted on O-ring 22, it is urged outwardly and a portion 32 thereof will be extruded through gap 26. When the hydraulic pressure is subsequently released, the extruded portion 32 of the O-ring is nibbled by the abutting faces of the fitting 20 and manifold 12 as they settle back together. This occurs repeatedly upon application and relaxation of pressure, until failure eventually occurs. It is undesirable for the O-ring to be under high compressive forces, because this causes it to function as a packing material that is not capable of significant axial movement within the space.

Other prior art techniques have been attempted in an effort to provide improved hydraulic sealing. For example, the European industry has utilized bonded seals, which comprise a metal washer to which is bonded a rubber washer of special cross-sectional shape, wherein the metal washer provides a backup to the rubber sealing member. Although such bonded seals work effectively in many applications, they are relatively expensive to manufacture, and the seals are difficult to use, often resulting in poor assembly and subsequent field failure. Another attempted solution is the use of O-ring boss components which are made with additional threads, whereby the additional friction afforded helps to resist rotational loosening of components. This is an additional cost, and has not proved to be as effective as the industry demands. A further type of prior art seal comprises an O-ring having a resilient spring as its core covered with a softer outer layer. This type of O-ring is not readily deformable and is designed to seal through the action of radial forces caused by an interference fit between the O-ring and the surfaces between which it is seated.

In prior art fittings, the O-ring seal is typically located between the hydraulic fluid within the system and the threads of the hydraulic fitting, thereby exposing the threads to the ambient atmosphere. This leaves the threads exposed to possible corrosion by electrolytic action and atmospheric attack, thereby making it difficult to disconnect the fitting. Should this corrosion occur at the interface between an hydraulic conveyance system and a manifold to which it is attached, it would be impossible to disassemble the system for repair or maintenance without damaging expensive components, such as the pumps and controls into which the connecting ports are machined. The problem of thread corrosion can be eliminated by locating the threads in communication with the hydraulic fluid. However, a major reason for the failure in service of an O-ring boss fitting is the loosening of the threads which occurs under conditions of pressure and vibration, and this situation is worsened by the lubrication of the threads by the hydraulic fluid within the system.

Current standard fittings include a thread which mates with the port entry thread, the former being undercut to accept the O-ring. Behind the O-ring there is a flat face metal-to-metal abutment, with the interface being perpendicular to the axis of the fitting. This face-to-face abutment does not lock the components together, and under conditions of vibration in combination with pressure, there is a loosening which takes place between the fitting and the port, which leads to failure of the coupling. A similar situation is present in the adjustable version of the prior art fitting, wherein a lock nut and washer provide the backup to the O-ring. The adjustable version of the standard fitting is even more prone to failure than the straight version, due to the fact that under pressure, the washer tends to deform slightly, thereby allowing a small gap to occur between its inner diameter and the outer diameter of the thread undercut against which it should abut with an interference fit. This creates two possible leak paths and a greater incidence of failure.

DE-B-1289374 discloses a fluid coupling assembly comprising a female member having an axially outer end face and an axial bore extending axially inwardly from the outer face and arranged to be in communication with fluid under pressure, the bore having an internal screw thread therein and an internal annular axially inwardly tapered surface disposed between the screw thread and the outer face; a male member having a portion disposed within the bore and having an external screw thread engaged with the internal screw thread of the female member, the male member comprising an annular external locking surface in tight contact with the internal tapered locking surface to form a friction lock, the male member comprising an annular undercut shoulder disposed between the external screw thread means and the external surface and defining an annular O-ring pocket which includes a corner where the external surface meets the pocket; and an O-ring disposed in the pocket, the O-ring being of a durometer and size permitting it to move axially in the pocket and deform into sealing engagement with the corner in response to fluid pressure.

According to the invention, such an assembly is characterized in that the internal tapered surface extends across the pocket past the O-ring.

The fluid coupling according to the present invention, in one form thereof, overcomes the problems and disadvantages of the prior art by providing a fluid coupling wherein metal-to-metal contact is made with a tapered surface on the port, which creates a wedge lock effect between these components and the elasticity of the metal components maintains the coupling assembly under tension, In order to enhance the frictional forces preventing rotation of the fitting, the O-ring is positionned between the interengaging screw threads and the shoulder. The O-ring is of a size and durometer permitting it to move axially within the pocket and this maintains the locking surfaces in a dry condition because they are isolated from the hydraulic fluid. Preferably, the contact between the fitting and port comprises tapered, annular surfaces, which increases the amount of frictional force resisting movement of the fitting. Alternatively, the contact can comprise an annular line contact, which results from the internal surfaces being tapered and engaging either a tapered, annular flat surface or a corner portion of the fitting. The screw threads of the fitting are in communication with the hydraulic system, and are therefore protected from corrosion by the ambient atmosphere. The O-ring functions to prevent fluid from passing to the lock area formed by the face-to-face metal surfaces, the lock area remaining unlubricated.

The fitting may comprise a pair of tapered surfaces, having an angle of 7°-45° relative to the axial direction, in front of which is trapped the O-ring in an undercut region on the fitting. A more preferred range of angles is 10°-35°, and the most preferred range is 10°-20°. If desired, the angle of the male member can be 1° smaller than the angle of the tapered surface on the female member so that a line contact can be achieved. As opposed to the prior art, the O-ring is significantly smaller, and is capable of slight axial movement within the O-ring pocket formed by the undercut groove in response to hydraulic pressure. For example, the ratio of the volume of the pocket that is not occupied by the O-ring to the volume of the O-ring is preferably greater than 0.4. The O-ring is also of a durometer that permits it to deform into sealing engagement against a corner of the pocket where the external surface meets the pocket.

It is recognised that under conditions of extreme pressure and vibration, such as may be encountered in the most aggressive of environments, the integrity of the lock provided by the tapered wedge could be overcome, and loosening could occur, thereby generating an axial gap. However, since the surfaces mate at an angle significantly less than 90° to the axis, a certain degree of axial movement of the fitting relative to the port will result in the creation of a gap which is only a fraction of the axial movement. This allows little, if any, extrusion of the O-ring into the gasp as compared with certain art fittings wherein the gap is quite large and is directly proportional to the amount of axial movement. Upon relaxation of the hydraulic pressure, there is enough space within the O-ring pocket to allow the O-ring to retract away from the tapered faces, thereby eliminating nibbling of the O-ring as is the case with the prior art. Furthermore, since the faces are tapered, the axial movement of the tapered face on the fitting toward the tapered face on the port tends to push the O-ring back into the pocket, rather than pinching it as in the prior art. Because the O-ring is of a smaller size, it is able to retract axially within the pocket, whereas in the prior art fittings, the O-ring is compressed to a degree where it occupies substantially the entire pocket and, once it extrudes through the gap, it is not able to retract back into the pocket.

In an alternative embodiment of the invention, there is provided an adjustable-type fitting wherein the external locking surface is provided by a lock nut having an annular skirt that extends into the internal surface.

In one aspect of this embodiment, the male member comprises a base element having the external screw thread thereon, a second external screw thread and a lock nut element screw threadedly engaged with the second screw thread and including a skirt portion disposed within the female member bore, the external surface being on the skirt portion, and an end of the skirt portion forming the undercut shoulder.

In another aspect of this embodiment, the male member comprises a lock nut element having a deformable annular skirt portion wedged into the internal surface.

By way of explanation, the straight-type fitting is used where a connection is required perpendicularly the face of the port, and the adjustable fitting is utilized to facilitate alignment of components which run parallel to the port faces or at some other angle thereto. The skirt portion of the adjustable fitting is wedged into the tapered internal surface as the lock nut is threaded on the base portion of the fitting. The outer peripheral surface of the skirt forms the aforementioned metal-to-metal lock discussed earlier, and the inside corner of the skirt may be swaged down onto the base portion of the fitting to provide a metal-to-metal engagement on the inner periphery of the skirt. The annular skirt portion of the lock nut should be capable of some deformation, although it is relatively hard, preferably having a hardness of about 121 to 127 brinell.

An advantage to the fluid coupling of the present invention is that the female port specifications and tolerances can remain essentially unchanged, and the improved male fitting will be interchangeable with current standard fittings. The fluid coupling according to the present invention has been shown to resist pressures in excess of 30,000 psi (1 psi = 6894 Pa). The ability to resist pressures of this magnitude is surprising and unexpected when compared to the performance of other hydraulic fittings that are currently commercially available.

In the accompanying drawings:

Fig. 1 is an enlarged, fragmentary sectional view showing a prior art O-ring boss fitting in its normal, tightened state;

Fig. 2 is an enlarged, fragmentary sectional view of the fitting of Fig. 1 wherein the fitting has been subjected to hydraulic pressure and vibration;

Fig. 3 is an elevational view, partially in section, of one embodiment of the present invention;

Fig. 4 is an enlarged, fragmentary sectional view of the fluid coupling of Fig. 3;

Fig. 5 is an elevational view of a modified embodiment of the present invention;

Fig. 6 is an enlarged, fragmentary sectional view of the hydraulic coupling of Fig. 5;

Fig. 7 is an enlarged, fragmentary sectional view of the coupling of Fig. 3 in its tightened state;

Fig. 8 is an enlarged, fragmentary sectional view of the fitting of Fig. 7 wherein the fitting has been subjected to excessive hydraulic pressure and vibration, whereby loosening has occurred; and

Fig. 9 is an enlarged, fragmentary sectional view of another embodiment of the invention.

With particular reference now to Figs. 3 and 4, a straight-type hydraulic coupling according to the present invention is shown. Female member 34, which may be a fluid manifold on an item of hydraulic equipment, such as a construction machine or an industrial robot, includes an axial bore 36 having internal threads 38 therein. Although the fluid coupling of the present invention is particularly useful for making hydraulic connections to ports, the invention could also be applied to hose couplings and other hydraulic connections.

Male member 44 comprises a base portion 50 having external threads 52 thereon and having an undercut groove 54 formed by undercut shoulder 56 that functions as an O-ring pocket 58 in which is received O-ring 60. A tapered, annular lock surface 62, preferably having an angle of 10°-20° with respect to the axis of the fitting, extends from threads 38 to the outer face 40 of female member 34. Although a range of 10°-20° is preferred, the angle of the taper could lie within a range of 10°-35° or 7°-45°, depending upon the configuration of the female member. A similarly tapered lock surface 64 on male member 44 extends from shoulder 56 to surface 66 on the hexagonal collar portion 68 of male fitting 44. Preferably, there is a gap between surfaces 40 and 66, which provides sufficient tolerance for the male member 44 to be screwed into female member 34 such that surfaces 62 and 64 come into tight abutting relationship, thereby generating the necessary frictional forces to prevent fitting 44 from loosening.

O-ring 60 is preferably homogeneous and is made of an elastomeric and deformable material, such as synthetic rubbers including Nitrile, Butyle, Neoprene, silicone and the like, which are available from many sources, such as Precision Rubber and Apple Rubber in the United States, and Dowty in Europe. The preferred durometer for O-ring 60 is 70-90, which permits the O-ring to deform under hydraulic pressure and seal against the interface between male member 44 and female member 34. O-ring 60 is deformed but not compressed during assembly, and is of a size small enough to permit it to move axially within O-ring pocket 58 in response to the application and release of hydraulic pressure. As will be appreciated, hose 46 conducts hydraulic fluid under pressure through standard hose adaptor 48 and fitting 44 to manifold 34 through bore 36. The pressurized hydraulic fluid will leak past threads 38 and 52 and force O-ring 60 into the corner formed by shoulder 56 and the axially inner portion of tapered surface 62 and deforms to seal against the corner. This corner is located where the interface between surfaces 62 and 64 meets O-ring pocket 58. Thus, O-ring 60 seals the frictional lock achieved by surfaces 62 and 64 from the hydraulic fluid, thereby ensuring that a dry wedge lock is achieved. The outer diameter of O-ring 60 is preferably smaller in diameter than the maximum diameter of the O-ring pocket between surfaces 54 and 62, which is defined by the maximum diameter of surface 62 contiguous with pocket 58. O-ring 60 is capable of axial movement within pocket 58 so that it is able to easily move into the corner formed between surface 62 and shoulder 56 and then retract away from that corner when hydraulic pressure is released. The ratio of the volume of O-ring pocket 58 that is not occupied by O-ring 60 ($V_P$) to the volume of O-ring 60 ($V_O$) is greater than about 0.4 and is preferably greater than about 0.5. For example, the ratio $V_P/V_O$ can be from about 0.5 to 0.9, and a preferred range of $V_P/V_O$ of about 0.55 to 0.82 has been found to be very effective in permitting O-ring 60 to move axially and seal against the corner where the interface between surfaces 62 and 64 meets O-ring pocket 58. It is also preferred that the transverse cross-sectional dimension of the O-ring be reduced to not more than about 90% at the point of maximum distortion when the fittings are screwed together.

In a preferred form of the invention, there is a metal-to-metal wedge-type joint between surfaces 62 and 64 occurring within the first 0.050 in. (1in = 2,54 cm) of the lead in taper. A clearance of 0.025 in. between the hexagonal shoulder 66 of the male member and the face 40 of the port is desired to allow for better unit loading of the component mating surfaces during assembly.

Figs. 7 and 8 illustrate the action of hydraulic coupling 42 when the coupling is loosened by the application of excessive hydraulic pressure. Fig. 7 shows hydraulic coupling 42 in its normal, tightened condition wherein male member 44 has been threaded into bore 36 to the extent that lock surfaces 62 and 64 are in tight, frictional engagement with each other, thereby resisting loosening of male member 44. In this condition, O-ring 60 is only slightly deformed, yet there is sufficient room within O-ring pocket 58 to permit O-ring 60 to move axially. Fig. 8 illustrates coupling 42 in its loosened condition wherein excessive pressure and vibration have overcome the resistance to loosening provided by the lock, thereby causing a gap to be created between surfaces 62 and 64. The hydraulic pressure also forces O-ring 60 into the corner formed by surfaces 56 and 62, and may cause a portion of O-ring 60 to be extruded into the gap between surfaces 62 and 64. As can be appreciated, however, the gap is quite small and only a very small portion of the O-ring 60 will be extruded therethrough. Upon the release of hydraulic pressure, hydraulic coupling 42 assumes the shape shown in Fig. 7, and the sliding action of surfaces 62 and 64 will push O-ring 60 back into pocket 58 without clamping or nibbling a portion thereof, as is the case in the prior art coupling shown in Fig. 2. As can be appreciated, the width of the gap formed between surfaces 62 and 64 is much less than the increase in gap between surfaces 66 and 40, which represents the amount of axial movement.

Figs. 5 and 6 show a modified, adjustable-type fluid coupling according to another embodiment of the invention. In this embodiment, the male member 72 comprises a base portion 74 having threads 75 engaged with threads 38 and a lock nut 76 received on a second set of threads 78. Male member 72 is connected to hydraulic hose or tube 80 by means of a standard 90° adapter 82.

Lock nut 76 includes a skirt portion 84 preferably deformable and preferably having a slightly divergent shape in radial cross section as more clearly shown in Fig. 6 which extends into the the tapered surface 62 on port 34. Skirt 84 preferably has a hardness of about 121-127 brinell, which will permit it to deform slightly inwardly when nut 72 is tightened, yet will not cause excessive deformation, which would reduce the effectiveness of the lock. Skirt 84 includes an external annular surface 90 that preferably has the same degree of taper, or slightly less, as surface 62. To assemble the fluid coupling 72 shown in Figs. 5 and 6, lock nut 76 is first threaded onto base portion 74, formed to conform with the port tapered surface 62, and O-ring 92 is inserted onto the undercut surface 88 formed in base portion 74. Then, base portion 74 is threaded into bore 36 until skirt 84 enters O-ring pocket 86. Then, lock nut 76 is threaded axially to the left as shown in Fig. 5 until annular surface 90 tightly abuts locking surface 62, and the corner 96 of skirt 84 is swaged against surface 88, thereby forming a very tight wedge lock, both between surfaces 62 and 90 and between corner 96 and surface 88. The function of O-ring 92 is the same as in the previous embodiment in that it seals against the corners formed by surfaces 62 and 88 and the end 98 of skirt 84. Once again, the frictional interfaces between surfaces 62 and 90 and between corner 96 and surface 88 are sealed from the lubricating hydraulic fluid that would leak past threads 75 and 38. The structure of skirt 84 is such that it will resist deformation under the translated forces from O-ring 92 during pressurization. As illustrated, the inner end 98 of skirt 84 is designed in buttressed form to resist high pressures and the walls are straight and taper slightly from the flat face so as to resist deformation.

Although the annular surface-to-surface contact of the embodiments of Figs. 3-8 is preferred, it is also possible to use an annular line contact seal as shown in Fig. 9. In this embodiment, male member 104 is provided with an annular corner surface 108 that is arcuate in axial planes intersecting the axis of the coupling. Thus, as male member 104 is threaded into the bore 106 of port 100, a corner 108 thereof is forced into tight frictional engagement with tapered annular surface 102, thereby providing a tight annular friction lock, which resists loosening. O-ring 110, which is of a size and shape that permits it to move axially within O-ring pocket 112, seals the contact line between surfaces 102 and 108 in a fashion similar to that of the previously discussed embodiments. An arcuate-tapered port (not shown) could be utilized with this fitting or with the adjustable fitting of Figs. 5 and 6.

For purposes of this application, the terms "thread means" and "threadedly" include the full helical threads as illustrated as well as other types of easy disconnect threads, such as bayonet or quarter twist interlock threads. Furthermore, whereas the O-ring is shown as having a circular cross-section, other O-ring shapes are also possible as long as they achieve the desired sealing on the internal side of the metal-to-metal contact. In the case of the various embodiments they may be modified to locate the arcuate sealing surface on the male member or to be further modified such that both surfaces are arcuate.

## Claims

1.  A fluid coupling assembly comprising a female member (34) having an axially outer end face (40) and an axial bore (36) extending axially inwardly from the outer face and arranged to be in communication with fluid under pressure, the bore having an internal screw thread (38) therein and an internal annular axially inwardly tapered surface (62,102) disposed between the screw thread and the outer face; a male member (44,72) having a portion disposed within the bore and having an external screw thread (52,74) engaged with the internal screw thread of the female member, the male member comprising an annular external locking surface (64,90,108) in tight contact with the internal tapered locking surface (62) to form a friction lock, the male member comprising an annular undercut shoulder (56,98) disposed between the external screw thread means and the external surface and defining an annular O-ring pocket (58,86,112) which includes a corner where the external surface meets the pocket; and an O-ring (60,92,110) disposed in the pocket, the O-ring being of a durometer and size permitting it to move axially in the pocket and deform into sealing engagement with the corner in response to fluid pressure; characterised in that the internal tapered surface (62,102) extends across the pocket (58,86,112) past the O-ring (60,92,110).

2.  A coupling assembly according to claim 1, wherein the ratio of volume $V_p$, of the pocket (58,86,112) not occupied by the O-ring (60,82,110) to the volume $V_o$ of the O-ring is greater than 0.4.

3.  A coupling assembly according to claim 2, wherein the ratio $V_p/V_o$ is between substantially 0.5 and 0.9.

4.  A coupling assembly according to any one of the preceding claims characterized in that the O-ring (60,86,112) has a durometer of substantially 70 to 90.

5.  A coupling assembly according to any one of the preceding claims, wherein the external surface (64,90) is tapered and in tight face-to-face contact with the tapered internal locking surface (62).

6.  A coupling assembly according to claim 5, wherein the external locking surface (64,90) is tapered at an angle 10° to 35° with respect to the axial direction.

7.  A coupling assembly according to any one of the preceding claims, wherein the male member (72) comprises a base element (74) having the external screw thread (75) thereon, a second external screw thread (78) and a lock nut element (76) screw threadedly engaged with the second screw thread and including a skirt portion (84) disposed within the female member bore (36), the external surface (90) being on the skirt portion, and an end (98) of the skirt portion forming the undercut shoulder.

8.  A coupling assembly according to claim 7, wherein the skirt portion (84) is wedged in the tapered internal surface.

9.  A coupling assembly according to claim 7 or claim 8, wherein the skirt portion (84) includes an annular inner corner portion (96) which is arranged to make an annular line contact with the base member external surface (88).

10. A coupling assembly according to any one of claims 1 to 6, wherein the male member (72) comprises a lock nut wedged into the internal surface.

11. A coupling assembly according to any one of claims 7 to 10, wherein the skirt portion (84) has a hardness of substantially 121 to 127 brinell.

## Patentansprüche

1.  Flüssigkeitskupplung, umfassend ein Mutterteil (34), das eine axial äußere Endfläche (40) und eine Axialbohrung (36) aufweist, die sich axial von der Außenfläche nach innen erstreckt, vorgesehen zum Herstellen einer leitenden Verbindung mit unter Druck stehendem Medium, wobei die Bohrung ein Innengewinde (38) aufweist sowie eine innere, ringförmige, sich axial nach innen verjüngende Fläche (62, 102), die zwischen dem Gewinde und der äußeren Fläche angeordnet ist; mit einem Schraubteil (44, 72), das ein Teil aufweist, das in der Bohrung angeordnet ist und ein Außengewinde (52, 74) aufweist, das mit dem Innengewinde des Mutterteiles verschraubt ist, wobei das Schraubteil eine ringförmige äußere Verriegelungsfläche (64, 90, 108) aufweist, die in strammem Kontakt mit der inneren, sich verjüngenden Verriegelungsfläche (62) steht, um einen Reibschluß zu bilden, wobei das Schraubteil eine ringförmige unterschnittene Schulter (56, 98) aufweist, die zwischen dem Außengewinde und der Außenfläche angeordnet ist und eine ringförmige O-Ring-Tasche (58, 86, 112) definiert, die eine Ecke umfaßt, wo sich die Außenfläche mit der Tasche trifft; und einen O-Ring (60, 92, 110), der in der Tasche angeordnet ist und der einen Durometer und eine Größe hat, welche es erlauben, daß er sich axial in der Tasche bewegt und mit der Ecke in Abhängigkeit vom Mediumdruck in dichtenden Eingriff gelangt, dadurch gekennzeichnet, daß sich die innere, sich verjüngende Fläche (62, 102) über die Tasche (58, 86, 112) hinter dem O-Ring (60, 92, 110) erstreckt.

2. Kupplung nach Anspruch 1, wobei das Verhältnis jenes Volumens $V_p$ der Tasche (58, 86, 112) das vom O-Ring (60, 82, 110) nicht eingenommen wird, zum Volumen $V_O$ des O-Ringes größer als 0,4 ist.

3. Kupplung nach Anspruch 2, dadurch gekennzeichnet, daß das Verhältnis $V_p/V_O$ im wesentlichen zwischen 0,5 und 0,9 liegt.

4. Kupplung nach einem der vorausgegangenen Ansprüche, dadurch gekennzeichnet, daß der O-Ring (60, 86, 112) einen Durometer von im wesentlichen 70 bis 90 hat.

5. Kupplung nach einem der vorausgegangenen Ansprüche, dadurch gekennzeichnet, daß die Außenfläche (64, 90) sich verjüngt und in strammem Flächen-zu-Flächen-Kontakt mit der sich verjüngenden inneren Verriegelungsfläche (62) steht.

6. Kupplung nach Anspruch 5, dadurch gekennzeichnet, daß sich die äußere verriegelnde Fläche (64, 90) unter einem Winkel von 10° bis 35° in Bezug auf die Achsrichtung verjüngt.

7. Kupplung nach einem der vorausgegangenen Ansprüche, dadurch gekennzeichnet, daß das Schraubteil (72) ein Basiselement (74) aufweist, das ein Außengewinde (75) hat, ein zweites Außengewinde (78) sowie eine Verriegelungsmutter (76), die mit dem zweiten Gewinde verschraubt ist und einen Schürzenteil (84) aufweist, der innerhalb der Schraubteilbohrung (36) angeordnet ist, und daß die Außenfläche (90) am Schürzenteil angeordnet ist, und ein Ende (98) des Schürzenteiles die unterschnittene Schulter bildet.

8. Kupplung nach Anspruch 7, dadurch gekennzeichnet, daß der Schürzenteil (84) in die sich verjüngende Innenfläche verkeilt ist.

9. Kupplung nach Anspruch 7 oder 9, dadurch gekennzeichnet, daß der Schürzenteil (84) eine ringförmige innere Ecke (96) aufweist, die derart angeordnet ist, daß ein ringförmiger Linienkontakt mit der Außenfläche (88) des Basisteiles hergestellt wird.

10. Kupplung nach einem der Ansprüche 1 bis 6, dadurch gekennzeichnet, daß das Schraubelement (72) eine Verriegelungsmutter (76) aufweist, die ein verformbares Schürzenteil (84) aufweist, das in die Innenfläche verkeilt ist.

11. Kupplung nach einem der Ansprüche 7 bis 10, dadurch gekennzeichnet, daß der Schürzenteil (84) eine Härte von im wesentlichen 121 bis 127 Brinell hat.

## Revendications

1°) Dispositif de raccord pour fluide comprenant un élément femelle (34) muni d'une face d'extrémité axialement extérieure (40) et d'un alésage axial (36) dirigé axialement vers l'intérieur à partir de la face extérieure et disposé de manière à communiquer avec le fluide sous pression, l'alésage comportant un pas de vis (38) à l'intérieur de celui-ci et une surface intérieure annulaire axialement conique vers l'intérieur (62, 102) disposée entre le pas de vis et la face extérieure ; un élément mâle (44, 72) muni d'une partie disposée à l'intérieur de l'alésage et comportant un pas de vis extérieur (52, 74) se vissant dans le pas de vis intérieur de l'élément femelle, l'élément mâle comprenant une surface de blocage extérieure annulaire (64, 90, 108) en contact de serrage avec la surface de blocage conique vers l'intérieur (62) de manière à former un blocage à friction, l'élément mâle comprenant en outre un épaulement d'évidement annulaire (56, 98) disposé entre le pas de vis extérieur et la surface extérieure de manière à définir une poche de joint torique annulaire (58, 86, 112) comportant un coin dans lequel la surface extérieure rejoint la poche ; et un joint torique (60, 92, 110) disposé dans la poche, la dureté et la taille de ce joint torique lui permettant de se déplacer axialement dans la poche et de se déformer pour venir en contact d'étanchéité avec le coin en réponse à la pression de fluide ; dispositif caractérisé en ce que la surface conique vers l'intérieur (62, 102) s'étend à travers la poche (58, 86, 112) au delà du joint torique (60, 92, 110).

2°) Dispositif de raccord selon la revendication 1, caractérisé en ce que le rapport entre le volume $V_p$ de la poche (58, 86, 112) n'étant pas occupé par le joint torique (60, 82, 110), et le volume $V_o$ du joint torique, est supérieur à 0,4.

3°) Dispositif de raccord selon la revendication 2, caractérisé en ce que le rapport $V_p/V_o$ est compris essentiellement entre 0,5 et 0,9.

4°) Dispositif de raccord selon l'une quelconque des revendications précédentes, caractérisé en ce que le joint torique (60, 86, 112) présente une dureté d'essentiellement 70 à 90 au duromtère.

5°) Dispositif de raccord selon l'une quelconque des revendications précédentes, caractérisé en ce que la surface extérieure (64, 90) est conique et vient en contact de serrage face contre face avec la surface de blocage intérieure conique (62).

6°) Dispositif de raccord selon la revendication 5, caractérisé en ce que la surface de blocage extérieure (64, 90) est conique et forme un angle de 10° à 35° par rapport à la direction axiale.

7°) Dispositif de raccord selon l'une quelconque des revendications précédentes, caractérisé en ce que l'élément mâle (72) comprend un élément de base (74) portant le pas de vis extérieur (75) sur celui-ci, un second pas de vis extérieur (78) et un élément d'écrou de blocage (76) se vissant sur le second pas de vis et comprenant une partie de jupe (84) disposée à l'intérieur de l'alésage (36) de l'élément femelle, la surface extérieure (90) se trouvant sur la partie de jupe et une extrémité (98) de la partie de jupe formant l'épaulement d'évidement.

8°) Dispositif de raccord selon la revendication 7, caractérisé en ce que la partie de jupe (84) est coincée dans la surface intérieure conique.

9°) Dispositif de raccord selon l'une quelconque des revendications 7 et 8, caractérisé en ce que la partie de jupe (84) comprend une partie de coin intérieure annulaire (96) disposée de manière à former une ligne de contact annulaire avec la surface extérieure (88) de l'élément de base.

10°) Dispositif de raccord selon l'une quelconque des revendications 1 à 6, caractérisé en ce que l'élément mâle (72) comprend un élément d'écrou de blocage (76) muni d'une partie de jupe annulaire déformable (84) coincée dans la surface intérieure.

11°) Dispositif de raccord selon l'une quelconque des revendications 7 à 10, caractérisé en ce que la partie de jupe (84) présente une dureté Brinell d'essentiellement 121 à 127.

FIG 1
PRIOR ART

FIG 2
PRIOR ART

FIG 7

FIG 8

FIG 3

FIG 4

FIG 6

FIG 5

FIG 9